Europäisches Patentamt

European Patent Office

Office européen des brevets

(19)

(11) Numéro de publication : **0 059 016**
**B1**

(12) # FASCICULE DE BREVET EUROPÉEN

(45) Date de publication du fascicule du brevet :
**07.11.84**

(51) Int. Cl.³ : **B 29 C 17/07**

(21) Numéro de dépôt : **82200167.3**

(22) Date de dépôt : **15.02.82**

(54) **Préforme en matière thermoplastique et procédé pour mouler par soufflage un corps creux à partir d'une telle préforme.**

(30) Priorité : **23.02.81 FR 8103708**

(43) Date de publication de la demande :
**01.09.82 Bulletin 82/35**

(45) Mention de la délivrance du brevet :
**07.11.84 Bulletin 84/45**

(84) Etats contractants désignés :
**AT BE CH DE FR GB IT LI NL SE**

(56) Documents cités :
**FR-A- 2 297 127**
**FR-A- 2 319 476**
**FR-A- 2 383 005**
**FR-A- 2 383 101**
**US-A- 3 339 230**
**US-A- 3 947 243**

(73) Titulaire : **SOLVAY & Cie (Société Anonyme)**
**Rue du Prince Albert, 33**
**B-1050 Bruxelles (BE)**

(72) Inventeur : **Branchadell, José**
**Rue du Fer à Cheval, 49**
**B-1970 Wezembeek-Oppem (BE)**

Jouve, 18, rue St-Denis, 75001 Paris, France

**Description**

La présente invention concerne une préforme en matière thermoplastique pour la production d'un corps creux, tel qu'un flacon, par moulage par soufflage ainsi qu'un procédé pour mouler un corps creux à partir d'une telle préforme.

Dans la réalisation de corps creux en matière thermoplastique par moulage par soufflage, il est de pratique courante de mouler, dans un premier stade, des préformes à partir de la matière thermoplastique choisie puis dans un second stade, de mouler par soufflage les corps creux désirés à partir de ces préformes. Cette technique est notamment exploitée dans les installations de moulage par injection et soufflage et dans les installations de production de corps creux moléculairement orientés dans lesquelles il s'avère nécessaire de conditionner thermiquement la matière thermoplastique, au stade de la préforme, à sa température d'orientation moléculaire par étirage, avant de procéder au soufflage final.

Dans des procédés de ce genre, il est connu de mouler des préformes présentant un corps d'allure générale cylindrique surmonté d'un faux goulot profilé. Par faux goulot on entend désigner toute portion de la préforme située au-dessus de la partie de la préforme formant ou destinée à former le col du corps creux désiré. Cette portion est généralement profilée et exploitée pour assurer les manipulations des préformes. Ce faux goulot est éliminé soit avant, soit après le soufflage final. Généralement on recycle, après broyage, la matière plastique qui le constitue. Ce faux goulot peut être fermé ou ouvert selon la technique de moulage exploitée pour la production de la préforme.

Avant de procéder au soufflage final, la préforme est amenée à la température idéale pour ce soufflage final. Idéalement, la température doit être aussi uniforme que possible sur la circonférence dans la préforme et à travers son épaisseur afin d'éviter toute distorsion de la matière thermoplastique lors du moulage par soufflage final.

A cet effet, il est connu d'assurer une mise en rotation des préformes autour de leur axe longitudinal durant leur conditionnement thermique préalable au soufflage final.

Ainsi, dans le brevet Etats-Unis 3 947 243 déposé le 30 décembre 1976 et cédé à BELOIT CORPORATION, on a décrit un four de conditionnement thermique au travers duquel des paraisons tubulaires ou préformes sont entraînées tandis qu'elles sont mises en rotation autour de leur axe longitudinal. A cet effet, les paraisons tubulaires successives sont enfilées sur des supports espacés montés de façon rotative sur un convoyeur traversant le four. Ces supports sont pourvus à leur base d'une roue dentée qui coopère avec les touffes de poils d'une brosse fixe judicieusement disposée, durant leur passage dans le four, pour assurer leur mise en rotation et partant celle des paraisons tubulaires enfilées sur ceux-ci. Le four décrit implique donc nécessairement le recours à des supports élaborés montés verticalement sur le convoyeur et l'enfilage des paraisons successives sur ces supports. En outre, la rotation imposée aux paraisons successives n'est pas uniforme et l'orientation angulaire identique des paraisons successives après conditionnement thermique, ne peut être assurée. Il en résulte qu'il est nécessaire de positionner angulairement les paraisons tubulaires traitées avant leur emprisonnement dans le moule de soufflage final notamment dans le cas où celles-ci présentent par exemple, un col fileté prémoulé dans sa forme définitive.

La présente invention a pour premier objet une préforme particulière comportant un faux goulot pour la réalisation de corps creux en matière thermoplastique par moulage par soufflage qui est spécialement conçue pour pouvoir être mise en rotation autour de son axe longitudinal durant son conditionnement thermique et ce sans exiger un appareillage compliqué et en contrôlant parfaitement la rotation.

La présente invention concerne dès lors une préforme en matière thermoplastique pour la production de corps creux par moulage par soufflage comportant un corps d'allure générale cylindrique surmonté d'un faux goulot profilé dans laquelle le faux goulot comporte une collerette dentée circulaire située dans un plan perpendiculaire à l'axe longitudinal de la préforme.

La collerette dentée circulaire équipant le faux goulot de la préforme selon l'invention peut être aisément réalisée lors du moulage, par exemple par injection ou par soufflage, de la préforme en utilisant un moule ayant une empreinte de moulage appropriée et cette collerette dentée peut être moulée avec précision puisque la matière thermoplastique est portée à sa température optimale de moulage lors du moulage de la préforme.

La collerette dentée circulaire prévue sur le faux goulot de la préforme peut être aisément exploitée ultérieurement, ainsi qu'il sera décrit plus loin, pour la mise en rotation de la préforme lors de son conditionnement thermique en vue du moulage par soufflage final. En outre, puisque cette collerette fait partie intégrante du faux goulot, elle est éliminée lors du décolletage du faux goulot du corps creux finalement moulé et elle n'apparaît donc pas sur le corps creux fini.

La collerette dentée circulaire peut être moulée en creux ou en relief dans le faux goulot, le second mode de réalisation étant généralement préféré pour les préformes présentant un faux goulot dont le diamètre externe minimum est inférieur à 40 mm.

La collerette dentée circulaire peut comporter de 5 à 30 et de préférence de 8 à 20 dents et le rapport entre le diamètre externe de la collerette dentée au niveau des arêtes des dents et le diamètre externe de la collerette dentée au niveau des creux des dents est compris entre 1,05 et 3 et, de préférence entre 1,1 et 2.

Le profil des dents de la collerette dentée circulaire peut être quelconque et ces dents peuvent être pleines ou moulés en creux. La hauteur de la collerette dentée circulaire est généralement comprise entre 1 et 20 mm. La préforme conforme à l'invention peut présenter un fond fermé ou ouvert et comporter un col moulé au moins partiellement dans sa forme définitive.

Dans un mode de réalisation particulier, la préforme peut être pourvue d'un col moulé difinitif comportant un filetage externe qui peut être exploité ultérieurement pour l'obturation du corps creux final par exemple au moyen d'une fermeture vissable.

Le profilage du faux goulot de la préforme peut avantageusement comporter une rainure ou une nervure circulaire externe qui peut être exploitée pour soutenir la préforme lâchement lors de sa mise en rotation ultérieure durant le conditionnement thermique. La préforme conforme à l'invention peut avoir une longueur sensiblement égale à la hauteur du corps creux final produit à partir de celle-ci ou une longueur inférieure à cette hauteur, cette dernière caractéristique étant préférée lorsque la préforme est destinée à la réalisation d'un corps creux final orienté moléculairement.

La préforme conforme à l'invention peut être réalisée à partir de toute matière plastique convenant pour la production de corps creux par moulage par soufflage. A titre d'exemple, on peut citer les résines à base de chlorure de vinyle, les polymères et les copolymères produits à partir d'alpha-oléfines contenant jusqu'à 8 atomes de carbone dans leur molécule, les polymères fluorés tels que le polyfluorure de vinylidène, les polymères et copolymères acryliques et notamment ceux produits à partir de nitrile acrylique, les polyesters thermoplastiques, tels que le polytéréphtalate d'éthylène-glycol et les polycarbonates.

La présente invention a pour second objet, un procédé pour réaliser un corps creux par moulage par soufflage dans lesquel on met en œuvre une préforme telle que décrite ci-avant.

Dans le procédé conforme à l'invention, on moule une préforme telle que définie plus haut, on assure le conditionnement thermique de la préforme puis on moule par soufflage le corps creux désiré à partir de la préforme conditionnée, en exploitant la collerette dentée circulaire prévue sur le faux goulot de la préforme pour assurer la mise en rotation de celle-ci autour de son axe longitudinal durant le conditionnement thermique.

La mise en rotation de la préforme durant le conditionnement thermique peut être assurée par un organe d'entraînement denté approprié tel qu'un pignon denté ou une crémaillère coopérant avec la collerette dentée circulaire prévue sur le faux goulot de la préforme.

Dans un mode de réalisation avantageux du procédé conforme à l'invention, on soutient lâchement la préforme, durant le conditionnement thermique au moyen d'organes de soutien appropriés, tels que des galets fous, coopérant avec le profilage du faux goulot et notamment avec une rainure ou une nervure externe prévue sur ce faux goulot. Le soutien de la préforme peut aussi être assuré par une bague appropriée dans laquelle la préforme est insérée et sur laquelle elle prend appui par la base de la collerette dentée circulaire.

Dans le procédé selon l'invention, il est loisible de contrôler la course de l'organe d'entraînement denté de façon à permettre une indexation constante de la position angulaire des préformes successives après conditionnement thermique. Ce mode de réalisation du procédé selon l'invention se révèle particulièrement avantageux lorsque les préformes mises en oeuvre présentent un col moulé définitif comportant un filetage externe exploité ultérieurement pour obturer le corps creux. Dans ce cas, il importe, en effet, de positionner correctement les préformes conditionnées thermiquement dans le moule de soufflage final pour éviter tout risque de détérioration du col moulé des préformes et, en particulier, de leur filetage. En contrôlant la course de l'organe d'entraînement, il est possible de conserver une indexation angulaire très précise des préformes conditionnées et donc de garantir leur introduction correcte dans le moule de soufflage final.

Dans un autre mode de réalisation du procédé dans lequel les préformes se déplacent linéairement devant des éléments thermiques la rotation des préformes peut être obtenue au moyen d'une crémaillère ou d'une chaîne fixe qui s'engage dans la collerette dentée circulaire prévue sur le faux goulot des préformes.

La préforme selon l'invention et son procédé d'exploitation pour la réalisation de corps creux par moulage par soufflage conviennent particulièrement pour la réalisation de corps creux orientés moléculairement car ils permettent un contrôle très précis du conditionnement thermique à température d'orientation avant soufflage final. De plus, en faisant appel à la possibilité de contrôle de l'indexation angulaire des préformes, il est possible de mouler directement le col éventuellement fileté du corps creux final lors du moulage de la préforme, c'est-à-dire à un moment où la matière plastique se trouve à une température de moulage idéale et d'éviter ainsi de devoir conformer ce col lors du soufflage final, c'est-à-dire à un moment où la matière thermoplastique se trouve à une température, moins élevée, d'orientation moléculaire qui ne permet pas un moulage aussi précis.

La préforme selon l'invention ainsi que le procédé de moulage par soufflage de cette préforme sont par ailleurs illustrés dans les figures des dessins annexés dans lesquelles :

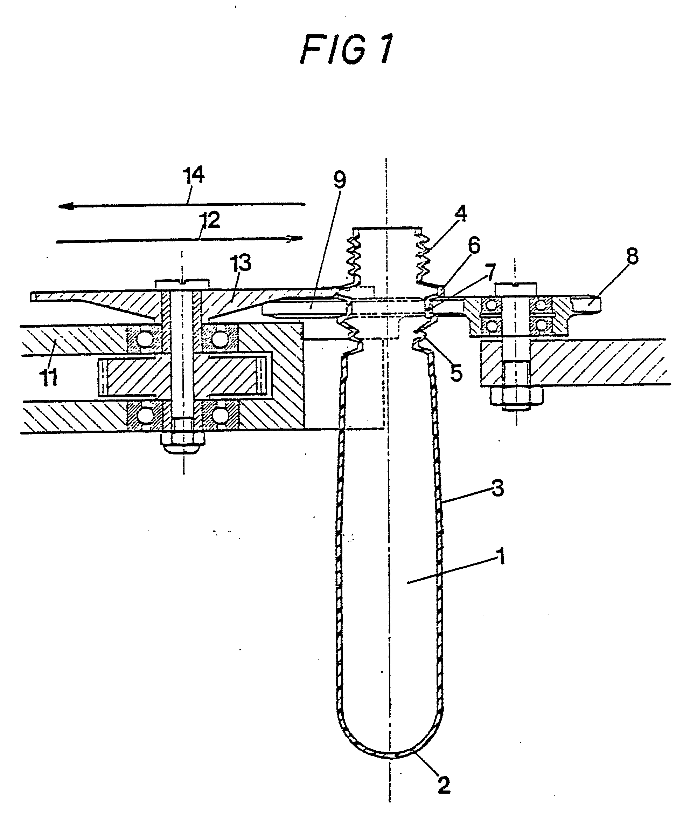

la figure 1 est une vue en élévation et en coupe d'une préforme selon l'invention et d'un dispositif simple permettant la réalisation du procédé pour réaliser un corps creux à partir d'une telle préforme

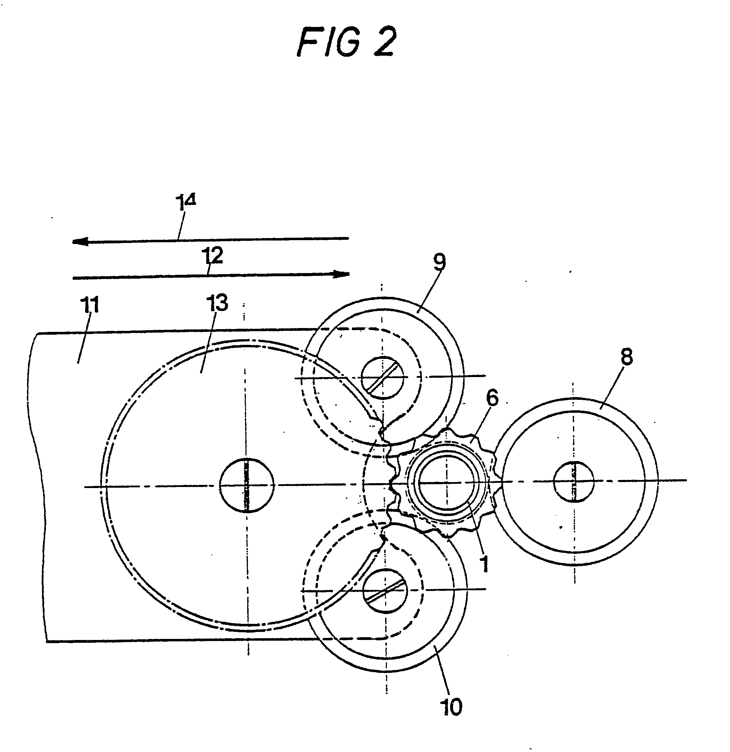

la figure 2 est une vue en plan des éléments de la fig. 1.

Ainsi qu'il apparaît sur les figures, la préforme 1 conforme à l'invention comporte un fond fermé 2 de forme hémisphérique et un corps 3 d'allure cylindrique surmonté d'un faux goulot profilé 4.

La préforme 1 comporte également un col partiellement moulé 5 dans la forme définitive du col du corps creux désiré et situé entre son corps 3 et son faux goulot 4. Conformément à l'invention, le faux goulot 4 de la préforme 1 comporte une collerette dentée circulaire 6 venue de moulage et située dans un plan perpendiculaire à l'axe longitudinal de la préforme. La collerette dentée circulaire illustrée comporte 12 dents de profil trapézoïdal et elle est moulée en relief sur le faux goulot 4. En outre, le profilage du faux goulot 4 comporte une rainure circulaire externe 7 située sous la collerette dentée circulaire 6.

Conformément au procédé selon l'invention, la préforme 1, durant son conditionnement thermique préalable au moulage final, est mise en rotation autour de son axe longitudinal par l'intermédiaire de la collerette dentée circulaire 6 prévue sur son faux goulot 4. A cet effet, la préforme 1 est amenée devant un élément thermique approprié, non représenté, au moyen par exemple d'une pince, également non représentée, agissant sur l'extrémité de son faux goulot profilé 4.

La préforme est ensuite abandonnée par la pince et est soutenue dans la situation illustrée, entre un galet fou fixe 8 et les galets fous 9 et 10 montés sur un équipage mobile 11 pouvant se déplacer selon la flèche 12, la tranche des galets 8, 9 et 10 étant insérée dans la rainure circulaire 7 prévue sur le faux goulot profilé 4 de la préforme 1.

La mise en rotation de la préforme 1 autour de son axe longitudinal est alors assurée par l'intermédiaire d'un pignon denté d'entraînement 13 qui est engréné dans la collerette dentée circulaire 6 prévue sur le faux goulot 4 de la préforme 1. En contrôlant la rotation du pignon denté d'entraînement 13, il est possible d'assurer une rotation identique pour les préformes 1 traitées successivement et donc de garantir un positionnement angulaire constant et précis des préformes 1 après traitement thermique.

Lorsque le conditionnement thermique est achevé, la préforme 1 est de nouveau saisie par une pince, non représentée, au niveau de l'extrémité de son faux goulot profilé 4, cette pince pouvant être celle qui a amené la préforme pour le traitement thermique, et la préforme est transférée par cette pince dans un moule de soufflage final après dégagement de la préforme par retrait de l'équipage 11 selon la flèche 14.

## Revendications

1. Préforme en matière thermoplastique pour la production de corps creux par moulage par soufflage comportant un corps (3) d'allure générale cylindrique surmonté d'un faux goulot profilé (4) caractérisé en ce que le faux goulot (4) comporte une collerette dentée circulaire (6) située dans un plan perpendiculaire à l'axe longitudinal de la préforme (1).

. 2. Préforme selon la revendication 1, caractérisée en ce que la collerette dentée circulaire (6) est moulée en relief sur le faux goulot profilé (4).

3. Préforme selon la revendication 1, caractérisée en ce que la collerette dentée circulaire (6) est moulée en creux sur le faux goulot profilé (4).

4. Préforme selon l'une quelconque des revendications 1 à 3, caractérisée en ce que la collerette dentée circulaire (6) comporte de 5 à 30 dents.

5. Préforme selon l'une quelconque des revendications 1 à 4, caractérisée en ce que le rapport entre le diamètre externe de la collerette dentée circulaire (6) au niveau des crêtes des dents et le diamètre externe de la collerette dentée circulaire (6) au niveau des creux des dents est compris entre 1,05 et 3.

6. Préforme selon l'une quelconque des revendications 1 à 5, caractérisée en ce qu'elle comporte en outre un col (5) moulé au moins partiellement dans sa forme définitive.

7. Procédé pour mouler par soufflage un corps creux dans lequel on moule une préforme (1) selon l'une quelconque des revendications 1 à 6, on assure le conditionnement thermique de la préforme (1) puis on moule par soufflage le corps creux final désiré à partir de la préforme (1) conditionnée caractérisé en ce qu'on exploite la collerette dentée circulaire (6) prévue sur le faux goulot profilé (4) de préforme (1) pour assurer la mise en rotation de celle-ci autour de son axe longitudinal durant le conditionnement thermique.

8. Procédé selon la revendication 7, caractérisé en ce que la mise en rotation de la préforme (1) durant le conditionnement thermique est obtenu par un organe d'entraînement denté (13) coopérant avec la collerette dentée circulaire (6).

9. Procédé selon la revendication 7 ou 8, caractérisé en ce qu'on soutient lâchement la préforme (1) au moyen d'organes de soutien (8, 9, 10) appropriés coopérant avec le profilage du faux goulot (4) de la préforme (1) durant la mise en rotation de celle-ci.

10. Procédé selon l'une quelconque des revendications 7 à 9, caractérisé en ce qu'on règle la mise en rotation de la préforme (1) durant le conditionnement thermique de façon à garantir son indexation angulaire après ce traitement.

## Claims

1. Preform, made from a thermoplastic, for the production of hollow articles by blow-moulding, comprising a body (3) of cylindrical general shape surmounted by a profiled false neck (4), characterised in that the false neck (4) possesses a circular toothed collar (6) located in a plane at right angles to the longitudinal axis of the preform (1).

2. Preform according to Claim 1, characterised in that the circular toothed collar (6) is moulded in relief on the profiled false neck (4).

3. Preform according to Claim 1, characterised in that the circular toothed collar (6) is moulded recessed on the profiled false neck (4).

4. Preform according to any one of Claims 1 to 3, characterised in that the circular toothed collar (6) possesses from 5 to 30 teeth.

5. Preform according to any one of Claims 1 to 4, characterised in that the ratio of the external diameter of the circular toothed collar (6) at the extremities of the teeth to the external diameter of the circular toothed collar (6) at the valleys between the teeth is between 1.05 and 3.

6. Preform according to any one of Claims 1 to 5, characterised in that it furthermore possesses a neck (5) moulded at least partially in its definitive shape.

7. Process for blow-moulding a hollow article, in which a preform (1) according to any one of Claims 1 to 6 is moulded, the preform is subjected to thermal conditioning and the desired final hollow article is then blow-moulded from the conditioned preform (1), characterised in that the circular toothed collar (6) provided on the profiled false neck (4) of the preform (1) is used for causing the rotation of the preform about its longitudinal axis during the thermal conditioning.

8. Process according to Claim 7, characterised in that the preform (1) is caused to rotate, during the thermal conditioning, by means of a toothed drive member (13) cooperating with the circular toothed collar (6).

9. Process according to Claim 7 or 8, characterised in that the preform (1) is held loosely by means of appropriate holding members (8, 9, 10) cooperating with the profiling of the false neck (4) of the preform (1) whilst the latter is caused to rotate.

10. Process according to any one of Claims 7 to 9, characterised in that the rotation of the preform (1) during thermal conditioning is controlled so as to ensure the angular indexing of the preform after this treatment.

**Ansprüche**

1. Vorform aus thermoplastischem Material für die Herstellung von Hohlkörpern durch Blasformen mit einem Korpus (3) im allgemeinen zylindrischen Aussehens, der von einem falschen profilierten Hals (4) gekrönt ist, dadurch gekennzeichnet, daß der falsche Hals (4) einen verzahnten kreisförmigen Kragen (6) aufweist, der in einer Ebene senkrecht zu der Längsachse der Vorform (1) liegt.

2. Vorform nach Anspruch 1, dadurch gekennzeichnet, daß der verzahnte kreisförmige Kragen (6) erhaben auf dem falschen profilierten Hals (4) ausgeformt ist.

3. Vorform nach Anspruch 1, dadurch gekennzeichnet, daß der verzahnte kreisförmige Kragen (6) hohl auf dem falschen profilierten Hals (4) ausgeformt ist.

4. Vorform nach irgendeinem der Ansprüche 1 bis 3, dadurch gekennzeichnet, daß der verzahnte kreisförmige Kragen (6) fünf bis dreißig Zähne aufweist.

5. Vorform nach irgendeinem der Ansprüche 1 bis 4, dadurch gekennzeichnet, daß das Verhältnis zwischen dem Außendurchmesser des verzahnten kreisförmigen Kragens (6) im Bereich der Kämme der Zähne und dem Außendurchmesser des verzahnten kreisförmigen Kragens (6) im Bereich der Vertiefungen der Zähne zwischen 1,05 und 3 liegt.

6. Vorform nach irgendeinem der Ansprüche 1 bis 5, dadurch gekennzeichnet, daß sie außerdem einen mindestens teilweise in seiner endgültigen Form ausgeformten Hals (5) aufweist.

7. Verfahren zum Blasformen eines Hohlkörpers, bei dem man eine Vorform (1) nach irgendeinem der Ansprüche 1 bis 6 herstellt, man die thermische Konditionierung der Vorform (1) sicherstellt und danach den gewünschten endgültigen Hohlkörper ausgehend von der konditionierten Vorform (1) im Wege des Blasformens ausformt, dadurch gekennzeichnet, daß man den verzahnten kreisförmigen Kragen (6), der auf dem falschen profilierten Hals (4) der Vorform (1) vorgesehen ist, dazu verwendet, das Inrotationversetzen derselben um ihre Längsachse während der thermischen Konditionierung sicherzustellen.

8. Verfahren nach Anspruch 7, dadurch gekennzeichnet, daß das Inrotationversetzen der Vorform (1) während der thermischen Konditionierung durch ein verzahntes Antriebsorgan (13) bewirkt wird, das mit dem verzahnten kreisförmigen Kragen (6) zusammen arbeitet.

9. Verfahren nach Anspruch 7 oder 8, dadurch gekennzeichnet, daß man die Vorform (1) mit Hilfe von Stützorganen (8, 9, 10) lose unterstützt, die entsprechend ausgebildet sind, mit dem Profil des falschen Halses (4) der Vorform (1) während des Inrotationversetzens derselben zusammen zu arbeiten.

10. Verfahren nach irgendeinem der Ansprüche 7 bis 9, dadurch gekennzeichnet, daß man das Inrotationversetzen der Vorform (1) während der thermischen Konditionierung derart regelt, daß ihre winkelmäßige Ausrichtung nach dieser Behandlung garantiert ist.

## FIG 1

# FIG 2